# EUROPÄISCHE PATENTSCHRIFT

(11) **EP 0 985 323 B1**
(45) Veröffentlichungstag und Bekanntmachung des Hinweises auf die Patenterteilung: **15.02.2006**
(21) Anmeldenummer: 99913108.9
(22) Anmeldetag: 04.03.1999
(51) Int. Cl.: H04Q 7/32

(54) **VORRICHTUNG ZUM VERWALTEN VON DATEN IN EINEM MOBILTELEFON**
DEVICE FOR MANAGING DATA IN A MOBILE TELEPHONE
DISPOSITIF DE GESTION DE DONNEES DANS UN TELEPHONE MOBILE

(30) Priorität: 13.03.1998 DE 19810926
(43) Veröffentlichungstag der Anmeldung: 15.03.2000
(73) Patentinhaber: ORGA Systems enabling Services GmbH, 33104 Paderborn (DE)
(72) Erfinder: WICHMANN, Friedrich, D-33102 Paderborn (DE)
(74) Vertreter: Richardt, Markus Albert
(86) Internationale Anmeldenummer: PCT/DE1999/000585
(87) Internationale Veröffentlichungsnummer: WO 1999/048313

(56) Entgegenhaltungen:
- EP-A- 0 767 426
- WO-A-94/30023
- DE-A- 19 543 843

## Beschreibung

Die Erfindung betrifft eine Vorrichtung zum Verwalten von Daten für den Betrieb eines Kommunikationsnetzes nach dem Oberbegriff des Patentanspruchs 1.

Aus der EP 0 689 368 A1 ist eine Vorrichtung zur Übermittlung von Meldungen in einem Kommunikationsnetz zur Sprach- und Datenverarbeitung bekannt, die ein zellulares Mobilfunknetz nach dem GSM-Standard (Global System for Mobile Communication) betrifft. Die gesamte Fläche des Mobilfunknetzes ist von einander angrenzenden und einander überlappenden Funkzellen bedeckt. In jeder Funkzelle ist eine Basisstation (RBS, Radio-Base-Station) vorgesehen, die die Funkversorgung zu den Mobilfunk-Endgeräten ausübt. Auf jeder Funkstrecke zwischen der Basisstation und dem Endgerät werden alle Sprach- und Steuerinformationen digital verschlüsselt übertragen. Eine Basis-Kontrolleinheit (BSC, Base-Station-Controller) dient zum reibungslosen Ablauf beim Übergang eines Endgerätes von einer funkzelle zu einer anderen benachbarten Funkzelle. Die Basis-Kontrolleinheiten sind ihrerseits zu einer übergeordneten Mobilfunkzentrale (MSC, Mobile-Service-Switching-Center) zusammengefaßt, die beispielsweise den Übergang zu einem drahtgebundenen Netz herstellt.

Mit der Mobilfunkzentrale ist eine Zentrale für Kurzmeldungen, ein sogenanntes Short Message Service Center (SMS-C) verbunden, das die Verbindung und die Übertragung von Meldungen (Short messages) von einem zentralen Rechner zu einen endgerät oder von einem ersten Endgerät zu einem zweiten Endgrät (Point-to-Point) steuert. In der GSM Phase 2 war es somit möglich, Kurzmeldungen wie "Ruf bitte Teilnehmer xy an" über das Short Message Service Center (SMS-C) an ein Endgerät zu übermitteln. Mit der GSM Phase 2+ ist nunmehr vorgesehen, daß Applikationen von einem zentralen Rechner über das Short Message Service Center (SMS-C) zu einem endgerät übermittelt weren können und dann auf einer Chipkarte dauerhaft abgespeichert werden. Beispielsweise kann eine Liste von Servicenummern des Netzbetreibers auf einen Speicherbereich der Chipkarte abgespeichert werden, auf den der Teilnehmer jederzeit zurückgreifen kann, wobei die entsprechende Applikation durch den Teilnehmer nicht gelöscht werden kann. Für jede weitere von dem Netzbetreiber auf die Chipkarte zu implementierende Applikation wird ein weiteres Speicherfeld benötigt. Da der Speichervorrat der Chipkarte begrenzt ist, kann es vorkommen, daß eine gewünschte Applikation nicht abgespeichert werden kann.

Die DE 195 43 843 A befasst sich mit einem Verfahren zur Aktualisierung von Software in einem Mikrocomputergestützten Telefon. Bei dem Verfahren wird zunächst das Telefon in einen Aktualisierungsmodus versetzt, woraufhin eine Telekommunikationsverbindung mit einem Computersystem hergestellt wird und eine Strukturtabelle des Telefons an das Computersystem übertragen wird. Das Computersystem erstellt ein Aktualisierungspaket mit neuen Softwaremodulen und einer neuen Strukturtabelle und überträgt dasselbe an das Telefon, woraufhin die Software des Telefons unter Verwendung des Aktualisierungspakets aktualisiert wird.

Die WO 9430023 A befasst sich mit einem Telekommunikationssystem, bei dem jeder Teilnehmer eine SIM-Karte aufweist, die feste Speicherorte besitzt, in die über das Telefonnetz beispielsweise per SMS Anwendungen bzw. Anwendungsdaten geladen werden können.

Aufgabe der Erfindung ist es daher, eine Vorrichtung zum Verwalten von Daten für den Betrieb eines Kommunikationsnetzes derart auszubilden, dass eine Speicherplatzverwaltung für die jeweiligen Chipkarten des Endgeräts ermöglicht wird, so dass der Netzbetreiber und/oder der Teilnehmer jederzeit Informationen über den aktuellen freien Speichervorrat erhält.

Zur Lösung dieser Aufgabe weist die Erfindung die Merkmale des Patentanspruchs 1 auf.

Der Vorteil der Erfindung besteht insbesondere darin, daß die erfindungsgemäße Vorrichtung eine besonders schnelle und effektive Verwaltung von Daten ermöglicht, die einem Benutzer die erforderlichen Informationen über den Speichervorrat auf der Chipkarte bereithält, um die Entscheidung zu treffen, ob und gegebenenfalls welche Applikation auf die Chipkarte speicherbar ist.

Nach einer Weiterbildung der Erfindung ist eine Applikations-Datenbank vorgesehen, in der die applikationsspezifischen Daten gespeichert sind. Vorzugsweise umfassen diese Daten kategorisierte Informationen über den Speicherumfang der eventuell auf die Chipkarte zu übertragenden Applikationen, so daß die Datenbank nur einen begrenzten Unfang haben muß.

Nach einer Ausgestaltung der Erfindung ist die Meldungseinheit mit einer Kurzmeldungseinheit verbunden, so daß die Information über den freien Speichervorrat auf der betreffenden Chipkarte durch Senden und Empfangen einer standardisierten Kurzmeldung (short message) ermöglicht wird. Sofern genügend freier Speicherplatz auf der Chipkarte für die betreffende Applikation vorhanden ist, kann diese Applikation mittels der Kurzmeldung an die Chipkarte übertragen und in dieser abgespeichert werden. Der Benutzer erhält somit nach erfolgter Speicherplatzkontrolle unverzüglich die gewünscht Applikation auf seiner Chipkarte implementiert.

Nach einer Ausgestaltung der Erfindung ist eine SIM-Datenbank vorgesehen, in der die kartenspezifischen Daten gespeichert sind. Durch die getrennte Zuordnung der kartenspezifischen Daten zu der SIM-Datenbank einerseits und der applikationsspezifischen Daten zu der Applikations-Datenbank andererseits kann ein schnelles Auffinden der umfangreichen Informationen erzielt werden.

Ein Ausführungsbeispiel der Erfindung wird nachfolgend anhand der Zeichnungen näher beschrieben.

Es zeigen:
- Figur 1: ein Blockschaltbild einer erfindungsgemäßen Vorrichtung und
- Figur 2: ein Speicherbereich auf einer Chipkarte.

In einem Kommunikationsnetz werden Daten bzw. Informationen von einem ersten Teilnehmer zu einem zweiten Teilnehmer oder mehreren Teilnehmern übertragen. Die Teilnehmer können diese Daten mittels Endgeräte ein- oder auslesen. Als Speichermedium für Daten kann eine Chipkarte vorgesehen sein.

Die erfindungsgemäße Vorrichtung dient zur Übertragung von Daten zwischen den entsprechenden Teilnehmern bzw. ermöglicht einem Teilnehmer, Informationen über den Zustand bzw. über die Applikationsbedingungen der Chipkarte zu erhalten. Die erfindungsgemäße Vorrichtung weist eine zentrale Verwaltungseinheit 1 und eine Meldungseinheit 2 auf, die den Datenfluß zwischen einem ersten Teilnehmer und gegebenenfalls einem zweiten Teilnehmer steuern.

Die zentrale Verwaltungseinheit 1 kann über eine Schnittstelle und eine Leitung mit einem ersten Teilnehmer 3 verbunden sein, der als Kundenberater eine Anfrage über das Vorhandensein der erforderlichen Speicherkapazität für bestimmte Applikationen auf einer Chipkarte 12 an die Verwaltungseinheit 1 richtet. Ein Server 4 der Verwaltungseinheit 1 nimmt die Anfrage entgegen und erzeugt intern eine Anforderung an eine Applikations-Datenbank 5 und gegebenenfalls an eine SIM-Datenbank 6. In der Applikations-Datenbank 5 sind applikationsspezifische Daten, wie z.B. der Name der jeweiligen Applikationen, die Informationen über die Zuordnung diser Applikationen bezüglich des Chipkartentyps bzw. der Kartenhersteller und der Speicherbedarf der jeweiligen Applikationen, gespeichert. Die SIM-Datenbank 6 dient zur Auswahl von Teilnehmern für bestimmte Applikationen und weist für die Chipkarte entsprechende Kodierungen von Kurzmeldungen auf. Sie enthält unter anderem Merkmale zur Kartenidentifikation (IMSI, ICCID, MSISDN), Daten über den Kartentyp, den Kartenhersteller sowie Schlüssel und Ursprungsadressen für eine Kurzmeldungs-Abspeicherungs-Operation von vorgegebenen Applikationen.

Die Meldungseinheit 2 weist eine OTA-Überwachungseinheit 7 auf, die die Ausführung von OTA-Operationen und die Übertragung der Kurzmeldungen überwacht. Sie bekommt beispielsweise Pakete einer oder mehrerer formatierten Kurzmeldungen mit Angabe der Zieladresse, wobei die Reihenfolge der Kurzmeldungen festgelegt wird. Die OTA-Überwachungseinheit 7 kann auf eine OTA-Datenbank 15 zugreifen, in der eine Liste von Kurzmeldungen sowie ein Statusfeld gespeichert, das die Zustandsinformationen der beteiligten OTA-Operationen zusammenfaßt.

Die OTA-Überwachungseinheit 7 steht mit einer Kurzmeldungseinheit 8 in Verbindung, die die Kurzmeldungen an ein bestimmtes Endgerät bzw. Chipkarte 12 weiterleitet oder vice versa. Die Übertragung der Kurzmeldungen erfolgt drahtlos (Over the Air, OTA).

Zusätzlich kann eine Kommunikationseinheit 10 vorgesehen sein, die den Datenfluß zwischen einer dritten Partei 11 und der Chipkarte 12 steuert. Diese ist ebenfalls mit der Kurzmeldungseinheit 8 verbunden. Darüber hinaus kann auch eine Verbindung der Kommunikationseinheit 11 zur Verwaltungseinheit 1 bestehen, so daß der Zugriff auf die Applikations-Datenbank 5 und der SIM-Datenbank 6 gegeben ist. Somit können auch dritte Parteien 11 auf die dort gespeicherten Daten zugreifen bzw. diese Daten verändern.

Die erfindungsgemäße Vorrichtung ermöglicht nach einem ersten Ausführungsbeispiel das Abfragen des vorgegebenen Speicherbedarfs für bestimmte gewünschte Applikationen, beispielsweise Programme für das Abrufen von aktuellen Informationen wie Fußballergebnisse, Börsendaten etc. Diese können auf Anfrage des Teilnehmers 3 in der Verwaltungseinheit 1 abgefragt und an denselben übermittelt werden. Dabei handelt es sich um standardisierte Speicherfelder, so daß der Aufwand an zu speichernden Informationen betreffend des Speicherbedarfs der jeweiligen Applikationen geringgehalten werden kann.

Nach einem zweiten Ausführungsbeispiel kann die Anfrage des Teilnehmers 3 derart gesteuert werden, daß über die Meldungseinheit 2 und der Kurzmeldungseinheit 8 direkt der Speichervorrat auf der entsprechenden vorgegebenen Chipkarte 12 abgeprüft wird. Dazu wird ein Speicherkennungssignal des auf der Chipkarte 12 gespeicherten Betriebsystems abgefragt und dieser dann zurück via Funkübertragung (OTA) über die Verwaltungseinheit 1 an den Teilnehmer 3 übermittelt. Hierdurch erhält der Teilnehmer 3 schnell und zuverlässig die gewünschten Informationen.

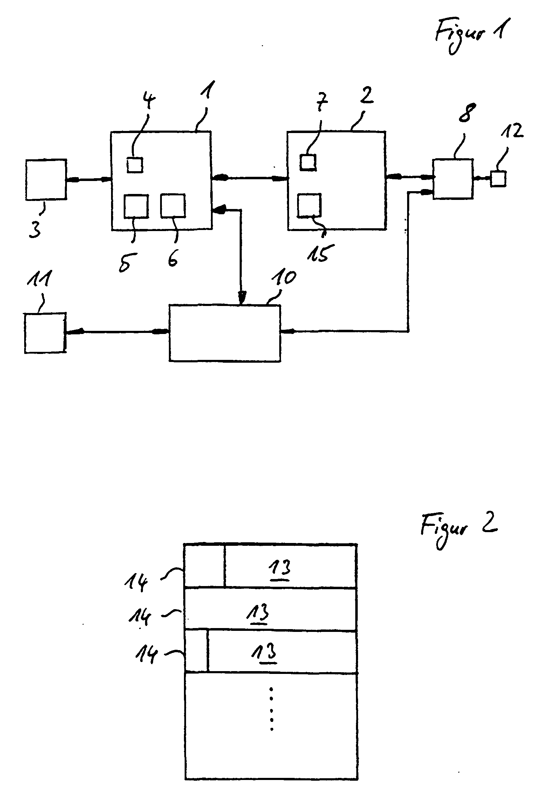

Wie aus Figur 2 entnehmbar, ist der Speicherbereich der Chipkarte 12 gefüllt mit einer Anzahl von Applikationen 13, die jeweils einem vorgegebenen Speicherfeld 14 zugeordnet sind. Die Information über die Größe und Anzahl der Speicherfelder 14 kann auf der Chipkarte 12 und/oder in der Applikations-Datenbank 5 abgespeichert sein. Vorteilhaft sind die Speicherfelder 14 in der Größe typisiert, so daß die zu verarbeitende Datenmenge beschränkt bzw. reduziert werden kann. Die Datenmenge der jeweiligen Applikationen 13 kann unterschiedlich sein. Die optimale Speicherausnutzung auf der Chipkarte 12 ist gewährleistet, wenn die Größe der Speicherfelder 14 konstant und an den Speicherbedarf der meisten auf die Chipkarte 12 zu ladenden Applikationen 13 angepaßt ist. Beispielhaft ist in Figur 2 zu entnehmen, daß eine zweite Applikation 13 das Speicherfeld 14 vollständig ausfüllt, während die anderen zwei Applikationen 13 jeweils einen über die Hälfte des Speicherfeldes 14 hinausgehenden Teil desselben belegen.

Die Erfindung ermöglicht auf diese Weise, schnell den auf der Chipkarte 12 erforderlichen Speicherbedarf zu ermitteln, damit der Teilnehmer den entsprechenden Auftrag zum Laden einer vorgegebenen Applikation auf der Chipkarte 12 geben kann.

## Patentansprüche

1. Vorrichtung zum Verwalten von Daten für den Betrieb eines Kommunikationsnetzes mit einer Vielzahl von Endgeräten, die jeweils mittels einer in das Endgerät einsetzbaren Chipkarte einem Benutzer zugeordnet sind, mit einer zentralen Verwaltungseinheit, die eine Meldungseinheit aufweist zum Senden und Empfangen von Kurzmeldungen, **dadurch gekennzeichnet, dass** der zentralen Verwaltungseinheit (1) eine Datenbank (5, 6) zugeordnet ist, in der zumindest chipkartentypische und auf einer Chipkarte gespeicherte Applikationen betreffende applikationsspezifische Daten gespeichert sind, und dass die zentrale Verwaltungseinheit (1) Anfragemittel (4) aufweist, die zum Erzeugen einer Anfrage an die Datenbank (5, 6) ausgebildet sind, wobei die zentrale Verwaltungseinheit (1) zum Ausgeben der Anzahl von für eine Applikation (13) auf der Chipkarte vorgesehenen freien Speicherfeldem (14) für den jeweiligen Chipkartentyp als Ergebnis der Anfrage ausgebildet ist.

2. Vorrichtung nach Anspruch 1, **dadurch gekennzeichnet, dass** die Datenbank (5, 6) eine Applikations-Datenbank (5) aufweist, in der die applikationsspezifischen Daten gespeichert sind, und dass die Applikations-Datenbank (5) weiterhin Informationen über die Größe und Anzahl von Speicherfeldem (14) auf der Chipkarte (12) enthält, wobei die zentrale Verwaltungseinheit (1) in Abhängigkeit von einer vorgegebenen Anzahl von auf der Chipkarte (12) ursprünglich gespeicherten Applikationen (13) zum Ausgeben des aktuell freien Speicherplatzvorrats auf der Chipkarte (12) ausgebildet ist.

3. Vorrichtung nach Anspruch 1, **dadurch gekennzeichnet, dass** die Meldungseinheit (2) mit einer Kurzmeldungseinheit (8) in Verbindung steht, die zum Weiterleiten einer Kurzmeldung von der zentralen Verwaltungseinheit (1) an die Chipkarte (12) und vice versa zum Abprüfen des Speichervorrats der Chipkarte (12) ausgebildet ist, wobei der Kurzmeldung ein Speicherkennungssignals eines auf der betreffenden Chipkarte (12) gespeicherten Betriebssystems zugeordnet ist.

4. Vorrichtung nach einem der Ansprüche 1 bis 3, **dadurch gekennzeichnet, dass** die zentrale Verwaltungseinheit (1) eine die applikationsspezifischen Daten enthaltende Applikations-Datenbank (5) und eine SIM-Datenbank (6) umfasst, in der kartenspezifische und zur Kodierung von Kurzmeldungen spezifische Daten gespeichert sind, wobei die Meldungseinheit (2) zum Veranlassen einer Übertragung von wenigstens einer in der Applikations-Datenbank (5) gespeicherten Applikation (13) an die Chipkarte (12) in Form einer in der Chipkarte (12) abzuspeichernden Kurzmeldung ausgebildet ist.

## Claims

1. Device for managing data for operating a communications network with a multitude of terminal devices, which are each allocated to a user by means of a chip card, which can be inserted in the terminal device, with a central management unit, which has a message unit for sending and receiving short messages, **characterised in that** a database (5, 6) is allocated to the central management unit (1), in which at least chip card type and applications specific data concerning applications stored on a chip card is stored, and the central management unit (1) has means of enquiry (4), which are designed to create an enquiry to the database (5, 6), in which the central management unit (1) is designed to give the number of free memory fields (14) provided on the chip card for an application (13) for the relevant chip card type as a result of the enquiry.

2. Device according to claim 1, **characterised in that** the database (5,6) has an applications database (5), in which applications specific data is stored, and the applications database (5) also contains information about the size and number of memory fields (14) on the chip card (12), in which the central management unit (1) is designed to give the memory storage space on the chip card (12) which is currently free, depending on a preset number of applications (13) originally stored on the chip card (12).

3. Device according to claim 1, **characterised in that** the message unit (2) is connected to a short message unit (8), which is designed to forward a short message from the central management unit (1) to the chip card (12) and vice versa to check the memory storage space of the chip card (12), in which a memory recognition signal of an operating system stored on the relevant chip card (12) is allocated to the short message.

4. Device according to one of claims 1 to 3, **characterised in that** the central management unit (1) comprises an applications database (5) containing applications specific data and a SIM database (6), in which card specific data and specific data for coding short messages is stored, in which the message unit (2) is designed to arrange a transfer of at least one application (13) stored in the applications database (5) to the chip card (12) in the form of a short message to be stored in the chip card (12).

## Revendications

1. Dispositif de gestion de données pour le fonctionnement d'un réseau de communication, comprenant une pluralité de terminaux respectivement associés à un utilisateur au moyen d'une carte à puce pouvant être introduite dans le terminal, comprenant une unité de gestion centrale qui présente une unité de messagerie pour l'envoi et la réception de messages courts,
**caractérisé en ce qu'**
à l'unité de gestion centrale (1) est associée une base de données (5, 6) dans laquelle sont stockées au moins des données typiques de la carte à puce et des données spécifiques aux applications concernant les applications stockées sur une carte à puce, et l'unité de gestion centrale (1) présente des moyens de requête (4) conçus pour générer une requête destinée à la base de données (5, 6), l'unité de gestion centrale (1) étant configurée pour indiquer, comme résultat de la requête, le nombre de champs de stockage (14) libres prévus pour une application (13) sur la carte à puce pour le type de carte à puce respectif.

2. Dispositif selon la revendication 1,
**caractérisé en ce que**
la base de données (5, 6) présente une base de données d'applications (5) dans laquelle sont stockées les données spécifiques aux applications, et la base de données d'applications (5) contient en outre des informations relatives à la taille et au nombre des champs de stockage (14) présents sur la carte à puce (12), l'unité de gestion centrale (1) étant conçue pour indiquer la réserve de place de stockage actuellement libre sur la carte à puce (12) en fonction d'un nombre prédéterminé d'applications (13) stockées à l'origine sur la carte à puce (12).

3. Dispositif selon la revendication 1,
**caractérisé en ce que**
l'unité de messagerie (2) est en liaison avec une unité de messages courts (8) qui, pour transmettre un message court d'une unité de gestion centrale (1) vers la carte à puce (12) et vice-versa, est conçue pour vérifier la réserve de stockage de la carte à puce (12), un signal de détection de stockage d'un système d'exploitation stocké sur la carte à puce correspondante (12) étant associé au message court.

4. Dispositif selon l'une des revendications 1 à 3,
**caractérisé en ce que**
l'unité de gestion centrale (1) comprend une base de données d'applications (5) contenant les données spécifiques aux applications, et une base de données SIM (6) dans laquelle sont stockées les données spécifiques aux cartes et les données spécifiques au codage de messages courts, l'unité de messagerie (2) étant conçue pour autoriser une transmission d'au moins une application (13) stockée dans la base de données d'applications (5) vers la carte à puce (12) sous la forme d'un message court devant être stocké dans la carte à puce (12).
